# EUROPÄISCHE PATENTSCHRIFT

(11) **EP 4 305 310 B1**
(45) Veröffentlichungstag und Bekanntmachung des Hinweises auf die Patenterteilung: **06.05.2026**
(21) Anmeldenummer: 22710384.3
(22) Anmeldetag: 04.03.2022
(51) Int. Cl.: B22F 5/10, B22F 7/08, B33Y 80/00, F04D 1/06, F04D 29/02, F04D 29/44, F04D 29/62

(54) **HERSTELLUNG EINES STUFENGEHÄUSES IN EINEM HYBRIDVERFAHREN**
MANUFACTURE OF A STAGE CASING IN A HYBRID PROCESS
FABRICATION D'UN CARTER D'ÉTAGE DANS UN PROCÉDÉ HYBRIDE

(30) Priorität: 09.03.2021 DE 102021105623
(43) Veröffentlichungstag der Anmeldung: 17.01.2024
(73) Patentinhaber: KSB SE & Co. KGaA, 67227 Frankenthal (DE)
(72) Erfinder: NOBEL, Tammuz, 67227 Frankenthal (DE)
(86) Internationale Anmeldenummer: PCT/EP2022/055538
(87) Internationale Veröffentlichungsnummer: WO 2022/189287

(56) Entgegenhaltungen:
- DE-A1- 102016 015 359
- DE-A1- 102018 218 989
- US-A1- 2017 030 377
- US-A1- 2019 313 878

## Beschreibung

Die Erfindung betrifft eine Kreiselpumpe mit mindestens einem Laufrad, das von einem Gehäuse umgeben ist, wobei das Gehäuse mindestens eine Leiteinrichtung umfasst.

Pumpen werden als mehrstufig bezeichnet, wenn mehrere Laufräder hintereinander angeordnet sind und vom Förderstrom seriell durchströmt werden. Im Wesentlichen wird die Förderhöhe einer einstufigen Kreiselpumpe durch die Bauform des Laufrades und die Umfangsgeschwindigkeit bestimmt. Kann die Drehzahl aufgrund anderer Randbedingungen nicht weiter erhöht werden und/oder führt die Vergrößerung des Laufraddurchmessers zu sehr kleinen spezifischen Drehzahlen und damit zu unwirtschaftlichen Wirkungsgraden, so kann durch die Hintereinanderschaltung mehrerer Stufen die Förderhöhe auch unter ökonomischen Aspekten gesteigert werden. Durch die Veränderung der Stufenzahl bei sonst gleichbleibenden Abmessungen und Drehzahlen verändert sich der Förderstrom einer solchen mehrstufigen Pumpe nicht, während sich der Leistungsbedarf und die Förderhöhe proportional zur Stufenzahl verhalten.

Leiteinrichtungen weisen meist Leitschaufeln auf. Zwischen den Leitschaufeln werden Leitkanäle für das Fördermedium gebildet. Solche Leiteinrichtungen können als Leiträder ausgebildet sein. Aus dem Laufrad austretendes Fördermedium tritt in die Leiteinrichtung ein. In der Leiteinrichtung wird kinetische Energie in Druckenergie umgewandelt. Weiterhin findet eine Umlenkung des Mediums statt. Der Drall wird gegebenenfalls für eine Zuströmung in eine weitere Pumpenstufe reduziert.

In der DE 39 12 279 C2 wird eine Kreiselpumpe ein- oder mehrstufiger Bauart mit mindestens einem Laufrad beschrieben. Dem Laufrad ist in Strömungsrichtung ein Leitrad nachgeordnet. Das Leitrad weist mehrere Leitschaufeln auf.

Die DE 10 2018 218 989 A1 beschreibt eine mehrstufige Hochdruckkreiselpumpe mit einem Mantelgehäuse, wobei am Übergang vom Ringraum in den Druckstutzen ein Einsatz angeordnet ist.

Die DE 10 2016 015 359 A1 zeigt eine Leiteinrichtung für einen Verdichter einer Aufladeeinrichtung mit mindestens einem Leitelement, wobei an dem Leitelement wenigstens ein aus Kunststoff gebildetes Dichtungselement gehalten ist, mit welchem das Leitelement zumindest teilweise gegen wenigstens ein Gehäuseelement der Aufladeeinrichtung abzudichten ist.

Die US 2019/313878 A1 offenbart ein Waschpumpenlaufrad mit einer Vielzahl von Schaufeln, die einstückig mit der Nabe ausgebildet sind, wobei sich die Schaufeln von der Nabe in einem Erstreckungswinkel relativ zu der Strömungsfläche der Nabe erstrecken, wobei der Erstreckungswinkel weniger als 60 Grad beträgt.

Ein Beispiel für eine Pumpe mit mehreren gleichartigen, in einer Tandemanordnung hintereinander geschalteten Stufengehäusen ist die Gliederpumpe. Diese Bauart wird häufig in der Kraftwerkstechnik, z.B. als Kesselspeisepumpe, und in industriellen Anwendungen eingesetzt, bei denen ein hoher Förderdruck benötigt wird.

Derartige Kreiselpumpen, auch als Doppelgehäuse- bzw. Mantelgehäusepumpen bekannt, sind Kreiselpumpen, die von einem mantelartigen Gehäuse umgeben sind. Das mit Saug- und Druckstutzen versehene Mantelgehäuse wird in einer senkrecht zur Welle liegenden Ebene mit einem Deckel verschlossen. Gewöhnlich handelt es sich hierbei um mehrstufige Pumpen zur Verwendung als Hoch- und Höchstdruckpumpe. Innerhalb des Mantelgehäuses sind mehrere Stufengehäuse seriell in Axialrichtung hintereinander angeordnet. Jedes Stufengehäuse umfasst ein Pumpenlaufrad sowie optional ein stationäres Leitrad.

Die einzelnen Stufengehäuse sind üblicherweise zusammen mit der Pumpenwelle als ein zusammenhängender Pumpeneinschub ausgebildet. Der Strömungsübergang vom letzten Leitrad bzw. dem letzten Stufengehäuse in den Druckstutzen erfolgt in der Regel über einen ausgebildeten Strömungsraum im Mantelgehäuse. Die DE 10 2019 001 882 A1 beschreibt eine solche Kreiselpumpe, bei der eine Innenkontur im spiralförmigen Strömungsraum eine Steigerung des Wirkungsgrads in der letzten Pumpstufe erzielen kann.

Die Laufräder und insbesondere die Leiteinrichtungen zeichnen sich durch eine massive und wenig filigrane Bauweise aus, die meist durch umformende und urformende Verfahren erzeugt wird. Die Steigerung des Pumpenwirkungsgrades ist durch die massive und wenig strömungsoptimierte Ausführung der Leiteinrichtungen limitiert. Insbesondere im Dauereinsatz als Kesselspeisepumpe erzeugen kleine Steigerungen des Wirkungsgrades eine große ökonomische Auswirkung.

Aufgabe der Erfindung ist es, eine Kreiselpumpe, auch eine mehrstufige Kreiselpumpe, mit einer optimierten Strömungsführung anzugeben. Die Kreiselpumpe soll dabei einen möglichst hohen Wirkungsgrad aufweisen. Eine Strömungsablösung soll weitgehend verhindert werden. Weiterhin soll eine möglichst verlustarme Verzögerung gewährleistet werden. Dabei sollte die Kreiselpumpe individuell an Kundenanforderungen gestaltet werden können. Diese Kreiselpumpe sollte aus möglichst wenigen Einzelteilen bestehen und dabei möglichst einfach zu montieren sein. Der Austausch von Ersatzteilen sollte durch die Konstruktion der Kreiselpumpe begünstigt sein. Die Kreiselpumpe sollte einfach und kostengünstig realisiert werden können.

Diese Aufgabe wird erfindungsgemäß durch eine Kreiselpumpe mit mindestens einem Laufrad gelöst. Bevorzugte Varianten sind den Unteransprüchen, der Beschreibung und den Zeichnungen zu entnehmen.

Erfindungsgemäß ist die Leiteinrichtung einer Kreiselpumpe mit mindestens einem Laufrad, das von einem Gehäuse umgeben ist, als Hybridbauteil aus mindestens einer konventionell gefertigten Komponente und mindestens einer generativ gefertigten Komponente aufgebaut.

Eine generativ gefertigte Komponente ist mit einem generativen Fertigungsverfahren erzeugt worden. Die Bezeichnung generative Fertigungsverfahren umfasst alle Fertigungsverfahren, bei denen Material Schicht für Schicht aufgetragen und somit dreidimensionale Bauteile erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken, Metalle, Carbon- und Graphitmaterialien

Unter generativen bzw. additiven Fertigungsverfahren versteht man Verfahren, bei denen Material Schicht für Schicht aufgetragen wird, um ein dreidimensionales Bauteil zu erzeugen. Gemäß der Erfindung sind die Leitelemente der Leiteinrichtung als generativ gefertigte Komponenten ausgebildet. Für die Ausbildung der Leitelemente werden insbesondere das selektive Laserschmelzen und das Cladding, auch bekannt als Auftragsschweißen, angewandt. In einer alternativen Variante der Erfindung ist auch das Kaltgasspritzen und das Extrudieren in Kombination mit dem Auftragen von schmelzfähigem Kunststoff ein anwendbares Verfahren.

Beim selektiven Laserschmelzen wird das Leitelement nach einem Verfahren hergestellt, bei dem zunächst eine Schicht eines Aufbaumaterials auf eine Unterlage aufgebracht wird. Vorzugsweise handelt es sich bei dem Aufbaumaterial zur Herstellung des Leitelements der Leiteinrichtung um metallische Pulverteilchen. Bei einer Variante der Erfindung werden dazu eisenhaltige und/oder kobalthaltige Pulverpartikel eingesetzt. Diese können Zusätze wie Chrom, Molybdän oder Nickel enthalten. Der metallische Aufbauwerkstoff wird in Pulverform in einer dünnen Schicht auf eine Platte aufgebracht. Dann wird der pulverförmige Werkstoff mittels einer Strahlung an den jeweils gewünschten Stellen lokal vollständig aufgeschmolzen und es bildet sich nach der Erstarrung eine feste Materialschicht. Anschließend wird die Unterlage um den Betrag einer Schichtdicke abgesenkt und es wird erneut Pulver aufgetragen. Dieser Zyklus wird solange wiederholt bis alle Schichten hergestellt sind und das fertige Leitelement entstanden ist. Erfindungsgemäß wird dabei eine Struktur erzeugt, die besonders filigran und strömungsoptimiert ausgebildet ist und durch konventionelle Verfahren technisch nicht erzeugt werden kann.

Als Strahlung kann beispielsweise ein Laserstrahl zum Einsatz kommen, welcher das Leitelement aus den einzelnen Pulverschichten generiert. Die Daten zur Führung des Laserstrahls werden auf der Grundlage eines 3D-CAD-Körpers mittels einer Software erzeugt. Alternativ zu einem selektiven Laserschmelzen kann auch ein Elektronenstrahl (EBN) zum Einsatz kommen.

Beim Auftragsschweißen oder Cladding wird das Leitelement nach einem Verfahren hergestellt, das eine Grundstruktur durch Schweißen beschichtet. Das Auftragsschweißen baut dabei durch einen Schweißzusatzwerkstoff in Form von einem Draht oder einem Pulver ein Volumen auf, das eine besonders filigrane und strömungsoptimierte Form des Leitelements realisiert.

Für die Anwendung von mehrgliedrigen Hochdruckkreiselpumpen und Kesselspeisepumpen konnten bislang keine generativ gefertigten Leiteinrichtungen eingesetzt werden, da deren Abmaße technisch nicht oder nur schwer realisierbar waren. Generativ gefertigte Leiteinrichtungen zeichnen sich durch hydraulisch optimierte Geometrien aus, die mit spanenden oder gießenden Fertigungsverfahren nicht erreicht werden können. Die Ausbildung einer hybriden Leiteinrichtung durch eine Vielzahl generativ gefertigter Leitelemente, die auf konventionell gefertigte Komponenten aufgesteckt werden, ermöglicht zum einen eine hydraulisch optimierte Geometrie und zum anderen Bauteilgrößen, die die bekannten, generativ möglichen Fertigungsmaße übersteigen.

Gemäß der Erfindung weist die Leiteinrichtung mehr als zwei, vorzugsweise mehr als drei, insbesondere mehr als vier, und/oder weniger als vierundzwanzig, vorzugsweise weniger als zweiundzwanzig, insbesondere weniger als zwanzig, generativ gefertigte Leitelemente auf. Vorteilhafterweise kann somit eine hybride Leiteinrichtung generiert werden, die aus einer Vielzahl von generativ gefertigten und hydraulisch optimierten Leitelementen besteht. Dabei ist die Bauteilgröße eines Leitelements durch die gängigen generativen Verfahren mit all ihren Vorteilen erzeugbar und kann durch den hybriden Aufbau mit konventionellen Komponenten auch sehr große Abmaße erreichen.

Vorteilhafterweise weist die generativ gefertigte Komponente, insbesondere das Leitelement, eine radial nach außen gekrümmte Form auf. Das Leitelement ist mittels CFD in seiner Form hydraulisch optimiert und lenkt die Strömung unter Drallreduzierung ohne Strömungsablösung und Wirbelbildung um. Die radial gekrümmte Form des Leitelements leitet die Strömung der nächsten Pumpenstufe auf ganz besonders ideale Weise zu.

Bei einer besonders günstigen Ausführung der Erfindung weist die generativ gefertigte Komponente, insbesondere das Leitelement, Formungen zur Strömungsführung auf. Das sind besonders filigran ausgeführte Anformungen und Rundungen des Leitelements, die den hydraulischen Wirkungsgrad der Pumpe auf ganz vorteilhafte Weise optimieren. Sie ermöglichen die Umlenkung der Strömung zur nächsten Pumpenstufe und reduzieren idealerweise den Drall der Strömung.

Dabei nimmt eine vordere Anformung die Strömungsentladung aus dem radialen Laufrad auf und führt sie besonders verlustarm einer zweiten Anformung zu, die zusammen mit der Leitscheibe und den benachbart angeordneten Leitelementen einen Strömungskanal bilden. Aus diesem Kanal heraus strömt das Fluid dem nachfolgend geordneten Laufrad besonders drallfrei zu. Idealerweise können die Anformungen der Leitelemente durch die generative Fertigung besonders dünn sowie mit feinen Krümmungsradien ausgebildet werden, wie es von konventionell gefertigten Leitelementen nicht bekannt ist.

Erfindungsgemäß umschließt die generativ gefertigte Komponente, insbesondere das Leitelement, eine Leitscheibe nahezu spaltfrei. Dadurch werden Fehlströmungen und Wirkungsgradverluste vermieden. Die generative Fertigung der Leitelemente erlaubt eine äußerst präzise sowie genaue Fertigung und somit eine spaltfreie Passung zu den konventionell gefertigten Komponenten der hybriden Leiteinrichtung.

Idealerweise weist eine generativ gefertigte Komponente, insbesondere das Leitelement, Dichtelemente zum spaltfreien Anschluss an eine Leitscheibe auf. Das generative Fertigungsverfahren erlaubt eine feingestaltete Geometrie des Leitelements, so dass beim Zusammenführen der hybriden Elemente der Leiteinrichtung ein spaltfreier Anschluss realisiert werden kann, wodurch der Wirkungsgrad der Kreiselpumpe optimal entfaltet werden kann.

In einer alternativen Variante der Erfindung sind die Wandungen der Leitelemente sehr dünn ausgebildet und die Leitelemente weisen zur Steigerung der Festigkeit eine innere Gitterstruktur auf. Auf diese vorteilhafte Weise lassen sich Leitelemente mit einem besonders hervorragenden Verhältnis von Masse zu Bauteilvolumen erzielen. Gerade im Vergleich zu konventionell gefertigten Leiteinrichtungen weist die hybride Ausbildung der Leiteinrichtungen eine äußerst geringe Masse auf.

Erfindungsgemäß kommt der hybride Aufbau der Leiteinrichtung ohne zusätzliche Fügetechnik aus. Erfindungsgemäß weist die generativ gefertigte Komponente, insbesondere das Leitelement, Elemente zum Eingreifen in Gegenelemente auf. Beispielsweise können zylinderförmige kurze Stifte am Leitelement angeformt sein, die sich in entsprechende Negative an der konventionellen Komponente einführen lassen und somit einen stabilen Verbund bilden. Die Montage der Kreiselpumpe ist hierdurch erheblich vereinfacht, da sich die Bauteile der hybriden Leiteinrichtung einfach stecken lassen.

Die Bezeichnung konventionelle Komponente bezeichnet eine Komponente, die mittels Urformen, Umformen oder einem subtraktiven Fertigungsverfahren erzeugt wird. Das Urformen ist eine Hauptgruppe von Fertigungsverfahren, bei denen aus einem formlosen Stoff ein fester Körper hergestellt wird, der eine geometrisch definierte Form hat. Urformen wird genutzt, um die Erstform eines festen Körpers herzustellen und den Stoffzusammenhalt zu schaffen. Beim Umformen werden Rohteile aus plastisch verformbaren Werkstoffen gezielt in eine andere Form gebracht, ohne dabei Material von den Rohteilen zu entfernen. Beim subtraktiven Fertigungsverfahren wird vom Werkstück etwas abgetrennt. Neben dem erzeugten Bauteil entstehen dabei vorwiegend Späne.

Gemäß der Erfindung ist mindestens eine konventionell gefertigte Komponente als eine Gehäusehaube ausgebildet. Insbesondere bei Mantelgehäusepumpen vereinfacht sich der Aufbau erheblich, wenn die Leiteinrichtung gleichzeitig das Gehäuse umfasst. Die Anzahl der nötigen Bauteile und die Montage reduzieren sich enorm.

Vorteilhafterweise ist eine konventionell gefertigte Komponente als eine Leitscheibe ausgebildet. Einfache Scheiben lassen sich besonders ökonomisch und präzise durch Gießen herstellen. Der hybride Aufbau der Leiteinrichtung kombiniert Bauteile, die jeweils durch das vorteilhafteste Fertigungsverfahren hydraulisch optimiert erzeugt wurden, zu einer Vorrichtung, die den bestmöglichen Wirkungsgrad einer mehrstufigen Kreiselpumpe erzielt.

Erfindungsgemäß weist mindestens eine konventionell gefertigte Komponente, insbesondere die Leitscheibe, Gegenelemente zum Eingreifen von Elementen auf. Beispielweise können die Gegenelemente als zylindrische Vertiefungen ausgebildet sein, in die die stiftartigen Elemente der Leitelemente eingreifen und somit die Steckverbindung zwischen den Leitelementen und der Leitscheibe realisieren. Die Montage der hybriden Leiteinrichtung ist hierdurch besonders einfach und zeiteffizient umsetzbar.

In einer alternativen Variante werden die generativ gefertigten Komponenten und die konventionell gefertigten Komponenten mit einer unlösbaren Verbindung, vorzugsweise einer Schweißverbindung, zu einer Leiteinrichtung gefügt. Eine solche Verbindung zeichnet sich durch ihre robuste und langlebige Ausführung aus.

Beim Fügen werden zwei oder mehr feste Körper, die Fügeteile, mit geometrisch bestimmter Gestalt dauerhaft verbunden. Beim Schweißen entsteht eine unlösbare Verbindung von Leitelementen und der Leitscheibe unter Anwendung von Wärme und/oder Druck, mit oder ohne Schweißzusatzwerkstoffe. Die Zusatzwerkstoffe werden üblicherweise in Form von Stäben oder Drähten zugeführt, abgeschmolzen und erstarren in der Fuge zwischen den Fügepartnern, um so die Verbindung zu erzeugen. Das Schweißen zählt zu den stoffschlüssigen Verbindungsmethoden, wobei Verbindungen mit hoher Festigkeit erzeugt werden.

Von besonders großem Vorteil ist die Fertigung auch von großen, hybriden Leiteinrichtungen mithilfe eines integrativen, additiven Fertigungsverfahren. Dabei werden zunächst die Gehäusehauben und die Leitscheibe durch Urformen und/oder Zerspanen ausgebildet. Die Leitelemente werden mithilfe eines generativen Verfahrens erzeugt. Die hybride Leiteinrichtung wird durch das Zusammenstecken der Leitscheibe mit den Leitelementen innerhalb der Gehäusehauben fertiggestellt.

Vorzugsweise handelt es sich bei dem Aufbaumaterial zur Herstellung der Kontaktfläche zum strömenden Fluid der Leitelemente um metallische Pulverteilchen. Bei einer Variante der Erfindung werden dazu eisenhaltige und/oder cobalthaltige Pulverpartikel eingesetzt. Diese können Zusätze wie beispielsweise Chrom, Molybdän oder Nickel enthalten.

Erfindungsgemäß werden die Leitelemente der Leiteinrichtung in einem additiven Fertigungsverfahren gebildet. Die 3D-Form eines Leitelements ist in einer Software als Datensatz hinterlegt. An den Stellen, an denen das Leitelement ausgebildet werden soll, wirkt ein Roboterarm, der über Werkzeuge unterschiedlicher additiver Verfahren verfügt, und bildet Schicht für Schicht die Kontaktfläche zum strömenden Medium und die stützende Gitterstruktur der Kontaktflächen aus. Vorteilhafterweise kann für jede Schicht nacheinander oder gleichzeitig der geeignete Aufbauprozess für jedes Aufbaumaterial ausgeführt werden, so dass ein komplexes Leitelement aus unterschiedlichen Werkstoffen entsteht, dessen Bereiche optimal an die Anforderungen des späteren Einsatzes angepasst sind.

In einer Variante der Erfindung wird eine Gitterstruktur mit dem Schmelzschicht-Werkzeug des additiven Fertigungsverfahrens erzeugt, bei dem aus schmelzfähigem Kunststoff ein Raster von Punkten auf eine Fläche aufgetragen wird. Durch Extrudieren mittels einer Düse sowie einer anschließenden Erhärtung durch Abkühlung an der gewünschten Position wird ein tragfähiger Aufbau, insbesondere in Form eines Gitters und/oder in Form von Waben, erzeugt. Indem der stützende Bereich eines Leitelements hohlraumbildend mit besonders tragfähiger Struktur erzeugt wird, weist ein Leitelement eine enorme Festigkeit bei gleichzeitig sehr geringer Masse auf. Der Aufbau eines Leitelements erfolgt üblicherweise, indem wiederholt jeweils zeilenweise eine Arbeitsebene abgefahren und dann die Arbeitsebene stapelnd nach oben verschoben wird, sodass der stützende Bereich eines Leitelements entsteht.

In einer besonders vorteilhaften Variante der Erfindung wird die Kontaktfläche zum strömenden Fluid des Leitelements aus einem Aufbaumaterial durch aufeinanderfolgendes Schmelzen und Erstarren von Schichten mittels Strahlung hergestellt. Die unterschiedlichen Eigenschaften der Bereiche eines Leitelements werden dabei durch Variationen der Strahlung generiert. Durch gezielte Steuerung der lokalen Wärmeeinbringung wird bereits beim Bau des Leitelements eine Modifizierung der Werkstoffeigenschaften vorgenommen. Dadurch gelingt es, in einem Bereich des Leitelements Zonen und Gefüge unterschiedlicher Werkstoffzustände eines chemisch-homogenen Werkstoffs und damit unterschiedlicher Eigenschaften zu erzeugen.

Der metallische Aufbauwerkstoff wird in Pulverform in einer dünnen Schicht auf eine Platte aufgebracht. Der pulverförmige Werkstoff wird mittels Strahlung an den jeweils gewünschten Stellen lokal vollständig aufgeschmolzen und bildet nach der Erstarrung eine feste Materialschicht. Anschließend wird diese Grundplatte um den Betrag einer Schichtdicke abgesenkt und es wird erneut Pulver aufgetragen. Dieser Zyklus wird solange wiederholt, bis alle Schichten hergestellt sind. Das fertige Leitelement wird vom überschüssigen Pulver gereinigt.

Das erfindungsgemäße Verfahren zeichnet sich durch besonders individuell gestaltbare Leiteinrichtungen aus. Dabei können Anpassungen der Leiteinrichtung je nach Anforderungen der Kreiselpumpe durch die generative Fertigung berücksichtigt werden. Die teure Einzelanfertigung wird durch die vergleichsweise günstige, hybride Ausbildung aus konventionell und generativ gefertigten Komponenten deutlich preiswerter. Zudem können die generativ gefertigten Komponenten eine Form aufweisen, die einen höheren Pumpenwirkungsgrad erzielen kann und bisher nicht auf konventionelle Fertigungsweise erreicht werden konnte.

Idealerweise verwendet man die Leiteinrichtung, die hybrid aus einer generativ gefertigten Komponente und mindestens einer konventionell gefertigten Komponente erzeugt wird, als Leiteinrichtung für eine Kreiselpumpe, insbesondere für eine Hochdruckgliederpumpe. Dabei zeichnet sich die Leiteinrichtung durch hervorragende strömungsmechanische Eigenschaften aus.

Vorteilhafterweise kann man durch das Hintereinanderschalten der erfindungsgemäßen und gehäusehaubenumfassenden Leiteinrichtung mit den entsprechenden Laufrädern eine mehrstufige Hochdruckgliederpumpe bilden. Diese Serienschaltung kann flexibel gekürzt oder verlängert und so an die Veränderungen im Betrieb angepasst werden.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine mehrstufige Kreiselpumpe nach dem Stand der Technik,
- Fig. 2: eine perspektivische Schnittdarstellung einer Leiteinrichtung,
- Fig. 3: eine schematische Darstellung eines Leitelements.

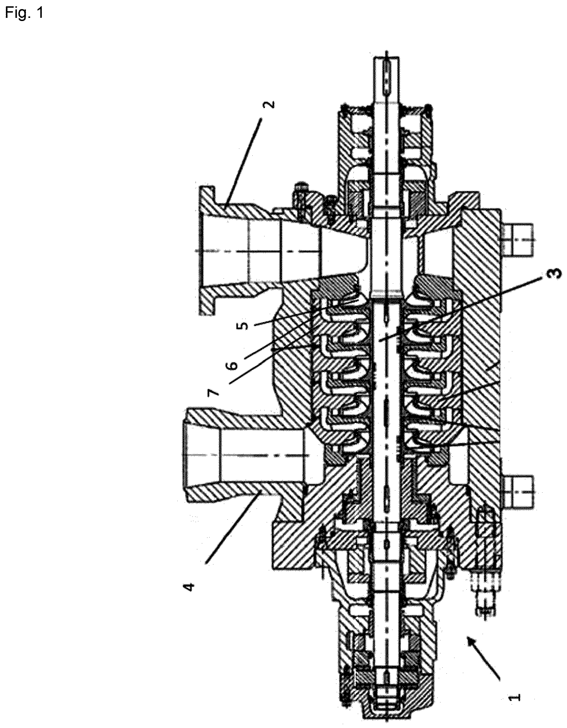

In der Fig. 1 ist eine bekannte mehrstufige Kreiselpumpe 1 in horizontaler Aufstellung dargestellt. Eine vertikale oder schräge Aufstellung ist ebenfalls möglich. Die Welle 3 verfügt in dieser Ausführungsvariante über eine Ausstattung von fünf Laufrädern. Das Fluid strömt in den Pumpeneinlauf 2 ein und verlässt die Pumpe über den Pumpenauslauf 4. Eine Förderflüssigkeit, beispielsweise ein leicht ausgasendes oder brennbares Fluid mit niedrigem Siedepunkt, strömt in Richtung der ersten Pumpenstufe mit einem Laufrad 5 radialer Bauart zu. Dieses als Sauglaufrad wirkende erste Laufrad 5 fördert in eine Leiteinrichtung 6, wobei das Laufrad 5 und die Leiteinrichtung 6 von einem Gehäuse 7 umgeben sind. Dabei bilden das Gehäuse 7 und die Leiteinrichtung 6 eine Einheit in Form eines Mantelgehäuses, die der Mantelgehäusepumpe ihren Namen verleiht. Die Leiteinrichtung 6 umfasst eine Rückführbeschaufelung, mit der das Fluid einer weiteren Pumpenstufe mit einem weiteren Laufrad zugeleitet wird. Dabei bilden jeweils ein Laufrad und eine Leiteinrichtung eine Einheit, eine sogenannte Pumpenstufe, in der mehrstufigen Pumpenanordnung.

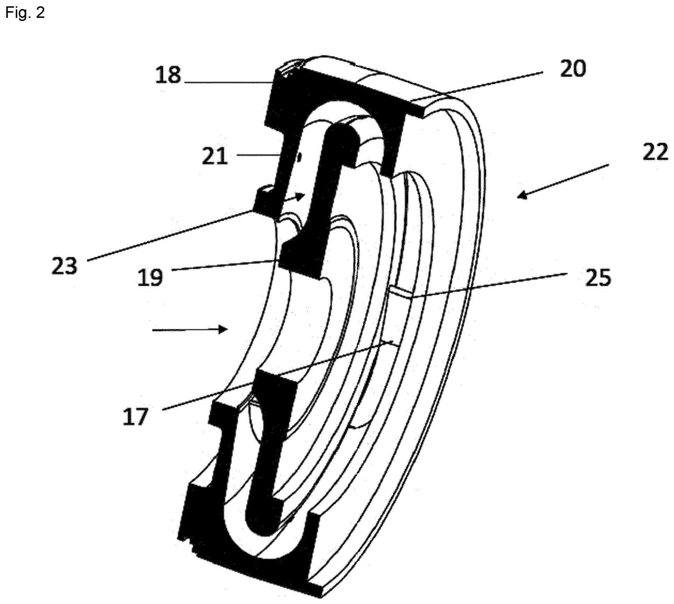

Fig. 2 zeigt einen perspektivischen Schnitt der erfindungsgemäßen Leiteinrichtung 23. Die Leiteinrichtung 23 umfasst die Gehäusehauben 18 und 20, die einen Teil des Kreiselpumpengehäuses 22 bilden. Die Gehäusehaube 18 weist Gegenelemente 21 auf, in die die in dieser Abbildung nicht dargestellten Elemente 24 eingreifen. Des Weiteren umfasst die Leiteinrichtung 23 die Leitscheibe 19 und exemplarisch ein Leitelement 17. Die erfindungsgemäße Leiteinrichtung 23 umfasst mehr als zwei, vorzugsweise mehr als drei, insbesondere mehr als vier, und/oder weniger als vierundzwanzig, vorzugsweise weniger als zweiundzwanzig, insbesondere weniger als zwanzig, generativ gefertigte Leitelemente 17.

Die Gehäusehaube 20 umgibt ein nicht dargestelltes Laufrad radial vollständig und fängt die Fluidentladung des Laufrades auf. Die Leitelemente 17 lenken die Fluidströmung durch ihre radial nach außen gekrümmte Form und den Formungen zur Strömungsführung 25 unter Drallreduzierung um. Dabei vermeiden die Leitelemente 17 durch ihre optimierte Strömungsform Wirbelbildungen sowie Strömungsablösungen und tragen somit zur Steigerung des Wirkungsgrades der Kreiselpumpe 1 bei.

Die Leiteinrichtung 23 ist ein hybrides Bauteil, das aus den konventionell gefertigten Teilen Leitscheibe 19 sowie den Gehäusehauben 18 und 20 und des generativ gefertigten Leitelements 17 besteht. Somit vereint der hybride Aufbau der Leiteinrichtung 23 die Vorteile des jeweiligen Fertigungsverfahrens zur Erreichung des optimalen Wirkungsgrades der erfindungsgemäßen Kreiselpumpe 1.

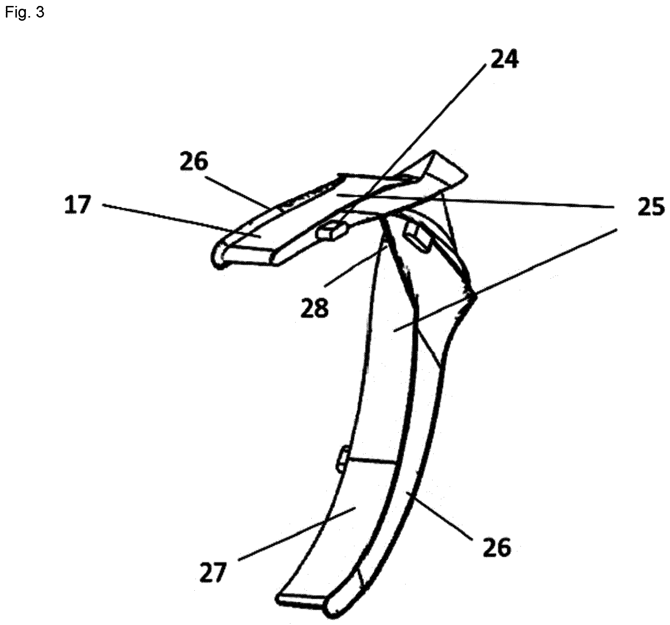

Fig. 3 zeigt eine schematische Darstellung des Leitelements 17, mit seiner radial nach außen gekrümmten Form. Das generativ gefertigte Leitelement 17 weist Formungen 25 zur verbesserten Strömungsführung und Dichtelemente 26 zum spaltfreien Anschluss an die nicht dargestellte Leitscheibe 19 auf. Die Elemente 24 zum Eingreifen in die nicht dargestellten Gegenelemente 21 ermöglichen die gesteckte Ausführung der hybrid gestalteten Leiteinrichtung 23.

Eine vordere Anformung 27 des Leitelements 17 nimmt die Strömungsentladung aus dem nicht dargestellten und vorgeschalteten Laufrad auf und führt sie besonders verlustarm einer zweiten Anformung 28 zu, die zusammen mit der in Fig. 2 gezeigten Leitscheibe 19 und benachbart angeordneten Leitelementen 17 Strömungskanäle bilden. Aus einem solchen Kanal heraus strömt das Fluid dem nachfolgend geordneten Laufrad besonders drallfrei zu. Die Anformungen 25 des Leitelements 17 sind durch die generative Fertigung besonders dünn und mit feinen Krümmungsradien ausgebildet, wodurch der Gesamtwirkungsgrad der Kreiselpumpe deutlich erhöht werden kann.

## Patentansprüche

1. Kreiselpumpe (1) mit mindestens einem Laufrad (5, 9), das von einem Gehäuse (22) umgeben ist, wobei das Gehäuse (22) mindestens eine Leiteinrichtung (23) umfasst,
**dadurch gekennzeichnet,**
**dass** die Leiteinrichtung (23) als Hybridbauteil aus mindestens einer konventionell gefertigten Komponente und mindestens einer generativ gefertigten Komponente aufgebaut ist, wobei die generativ gefertigte Komponente als Leitelement (17) ausgebildet ist, wobei mindestens eine konventionell gefertigte Komponente Gegenelemente (21) aufweist und die generativ gefertigte Komponente Elemente (24) zum Eingreifen in Gegenelemente (21) aufweist.

2. Kreiselpumpe nach Anspruch 1, **dadurch gekennzeichnet, dass** die Leiteinrichtung (23) mehr als zwei, vorzugsweise mehr als drei, insbesondere mehr als vier, und/oder weniger als vierundzwanzig, vorzugsweise weniger als zweiundzwanzig, insbesondere weniger als zwanzig, generativ gefertigte Leitelemente (17) aufweist.

3. Kreiselpumpe nach einem der Ansprüche 1 bis 2, **dadurch gekennzeichnet, dass** eine generativ gefertigte Komponente eine radial nach außen gekrümmte Form aufweist.

4. Kreiselpumpe nach einem der Ansprüche 1 bis 3, **dadurch gekennzeichnet, dass** eine generativ gefertigte Komponente Formungen (25) zur Strömungsführung aufweist.

5. Kreiselpumpe nach einem der Ansprüche 1 bis 4, **dadurch gekennzeichnet, dass** eine generativ gefertigte Komponente eine Leitscheibe (19) nahezu spaltfrei umschließt.

6. Kreiselpumpe nach einem der Ansprüche 1 bis 5, **dadurch gekennzeichnet, dass** eine generativ gefertigte Komponente Dichtelemente (26) zum spaltfreien Anschluss an die Leitscheibe (19) aufweist.

7. Kreiselpumpe nach einem der Ansprüche 1 bis 6, **dadurch gekennzeichnet, dass** mindestens eine konventionell gefertigte Komponente als eine Gehäusehaube (18, 20) ausgebildet ist.

8. Kreiselpumpe nach einem der Ansprüche 1 bis 7, **dadurch gekennzeichnet, dass** eine konventionell gefertigte Komponente als eine Leitscheibe (19) ausgebildet ist.

9. Verfahren zur Herstellung einer Kreiselpumpe (1) mittels einer integrativen Fertigungsweise, gemäß den Ansprüchen 1 bis 8, mit folgenden Schritten:
• Ausbilden einer Gehäusehaube (18, 20) und einer Leitscheibe (19)
wobei die Gehäusehaube (18,20) und/oder die Leitscheibe (19) durch Urformen und/oder Zerspanen hergestellt ist,
• Ausbilden der Leitelemente (17) durch ein generatives Verfahren,
• Zusammenstecken der Leitelemente (17), der Leitscheibe (19) und der Gehäusehauben (18, 20) zu einer hybrid erzeugten Leiteinrichtung (23) eines Kreiselpumpengehäuses (22).

10. Verwendung einer Kreiselpumpe gemäß den Ansprüchen 1 bis 8 mit mindestens einer generativ gefertigten Komponente und mindestens einer konventionell gefertigten Komponente als Gehäuse (22) mit integrierter Leiteinrichtung (23).

## Claims

1. Centrifugal pump (1) having at least one impeller (5, 9) which is surrounded by a casing (22), wherein the casing (22) comprises at least one guide device (23),
**characterized**
**in that** the guide device (23) is constructed as a hybrid component comprising at least one conventionally manufactured constituent and at least one generatively manufactured constituent, wherein the generatively manufactured constituent is configured as a guide element (17), wherein at least one conventionally manufactured constituent has counter-elements (21) and the generatively manufactured constituent has elements (24) for engaging into counter-elements (21).

2. Centrifugal pump according to Claim 1, **characterized in that** the guide device (23) has more than two, preferably more than three, in particular more than four, and/or fewer than twenty-four, preferably fewer than twenty-two, in particular fewer than twenty, generatively manufactured guide elements (17).

3. Centrifugal pump according to either of Claims 1 and 2, **characterized in that** a generatively manufactured constituent has a radially outwardly curved shape.

4. Centrifugal pump according to one of Claims 1 to 3, **characterized in that** a generatively manufactured constituent has formations (25) for flow guidance.

5. Centrifugal pump according to one of Claims 1 to 4, **characterized in that** a generatively manufactured constituent surrounds a guide plate (19) almost without any gaps.

6. Centrifugal pump according to one of Claims 1 to 5, **characterized in that** a generatively manufactured constituent has sealing elements (26) for gap-free connection to the guide plate (19).

7. Centrifugal pump according to one of Claims 1 to 6, **characterized in that** at least one conventionally manufactured constituent is configured as a casing cover (18, 20).

8. Centrifugal pump according to one of Claims 1 to 7, **characterized in that** a conventionally manufactured constituent is configured as a guide plate (19).

9. Process for manufacturing a centrifugal pump (1) by means of an integrative manufacturing procedure
and according to Claims 1 to 8, having the following steps:
• forming a casing cover (18, 20) and a guide plate (19), wherein the casing cover (18, 20) and/or the guide plate (19) are/is manufactured by primary shaping and/or cutting,
• forming the guide elements (17) by a generative process,
• fitting the guide elements (17), the guide plate (19) and the casing covers (18, 20) together to form a guide device (23), produced in a hybrid manner, of a centrifugal pump casing (22).

10. Use of a centrifugal pump according to Claims 1 to 8 having at least one generatively manufactured constituent and at least one conventionally manufactured constituent as a casing (22) with an integrated guide device (23).

## Revendications

1. Pompe centrifuge (1) présentant au moins un rotor (5, 9), qui est entouré par un carter (22), le carter (22) comprenant au moins un dispositif conducteur (23),
**caractérisée**
**en ce que** le dispositif conducteur (23) est constitué, en tant que pièce hybride, d'au moins un composant fabriqué de manière conventionnelle et d'au moins un composant fabriqué de manière générative, le composant fabriqué de manière générative étant réalisé comme un élément conducteur (17), au moins un composant fabriqué de manière conventionnelle présentant des contre-éléments (21) et le composant fabriqué de manière générative présentant des éléments (24) destinés à s'emboîter dans les contre-éléments (21).

2. Pompe centrifuge selon la revendication 1, **caractérisée en ce que** le dispositif conducteur (23) présente plus de deux, de préférence plus de trois, en particulier plus de quatre
et/ou moins de vingt-quatre, de préférence moins de vingt-deux, en particulier moins de vingt, éléments conducteurs (17) fabriqués de manière générative.

3. Pompe centrifuge selon l'une des revendications 1 à 2, **caractérisée en ce qu'**un composant fabriqué de manière générative présente une forme incurvée radialement vers l'extérieur.

4. Pompe centrifuge selon l'une des revendications 1 à 3, **caractérisée en ce qu'**un composant fabriqué de manière générative présente des éléments façonnés (25) pour le guidage de l'écoulement.

5. Pompe centrifuge selon l'une des revendications 1 à 4, **caractérisée en ce qu'**un composant fabriqué de manière générative enveloppe un disque conducteur (19) quasiment sans fente.

6. Pompe centrifuge selon l'une des revendications 1 à 5, **caractérisée en ce qu'**un composant fabriqué de manière générative présente des éléments d'étanchéité (26) pour le raccordement sans fente au disque conducteur (19).

7. Pompe centrifuge selon l'une des revendications 1 à 6, **caractérisée en ce qu'**au moins un composant fabriqué de manière conventionnelle est réalisé comme un capot (18, 20) de carter.

8. Pompe centrifuge selon l'une des revendications 1 à 7, **caractérisée en ce qu'**un composant fabriqué de manière conventionnelle est réalisé comme un disque conducteur (19).

9. Procédé de fabrication d'une pompe centrifuge (1) au moyen d'un mode de fabrication intégré,
selon les revendications 1 à 8, présentant les étapes suivantes :
• réalisation d'un capot (18, 20) de carter et d'un disque conducteur (19), le capot (18, 20) de carter et/ou le disque conducteur (19) étant fabriqué(s) par formage et/ou par usinage,
• réalisation des éléments conducteurs (17) par un procédé génératif,
• assemblage des éléments conducteurs (17), du disque conducteur (19) et des capots (18, 20) de carter en un dispositif conducteur (23) produit de manière hybride d'un carter (22) de pompe centrifuge.

10. Utilisation d'une pompe centrifuge selon l'une des revendications 1 à 8 présentant au moins un composant fabriqué de manière générative et au moins un composant fabriqué de manière conventionnelle comme carter (22) présentant un dispositif conducteur (23) intégré.
